# FASCICULE DE BREVET EUROPEEN

(11) **EP 1 791 743 B1**
(45) Date de publication et mention de la délivrance du brevet: **17.12.2008**
(21) Numéro de dépôt: 05798955.0
(22) Date de dépôt: 05.09.2005
(51) Int. Cl.: B60W 30/18, B60W 40/10

(54) **PROCEDE D'ELABORATION D'UNE CONSIGNE DE COMMANDE ADAPTEE A UNE SITUATION DE FREINAGE POUR UN DISPOSITIF DE TRANSMISSION D'UN GROUPE MOTOPROPULSEUR DE VEHICULE AUTOMOBILE ET DISPOSITIF CORRESPONDANT**
VERFAHREN ZUM ERZEUGEN EINER AN EINE BREMSSITUATION ANPASSBAREN STEUERANWEISUNG FÜR EINE ÜBERTRAGUNGSVORRICHTUNG EINES KRAFTFAHRZEUGANTRIEBS UND ENTSPRECHENDE VORRICHTUNG
METHOD FOR PRODUCING A CONTROL INSTRUCTION ADAPTABLE TO A BRAKE SITUATION FOR A TRANSMISSION DEVICE OF A MOTOR VEHICLE POWER TRAIN AND CORRESPONDING DEVICE

(30) Priorité: 10.09.2004 FR 0409645
(43) Date de publication de la demande: 06.06.2007
(73) Titulaire: RENAULT S.A.S., 92100 Boulogne Billancourt (FR)
(72) Inventeur: ROUDEAU, Frédéric, F-94400 VITRY SUR SEINE (FR); BRETHEAU, Jean, F-92160 ANTONY (FR); VERMUSE, Vincent, F-91180 ST GERMAIN LES ARPAJONS (FR)
(86) Numéro de dépôt international: PCT/FR2005/050710
(87) Numéro de publication internationale: WO 2006/030144

(56) Documents cités:
- EP-A- 1 275 551
- FR-A- 2 834 939
- US-A- 4 720 793
- US-B1- 6 287 237

## Description

La présente invention concerne un procédé de commande d'un dispositif de transmission d'un groupe moto-propulseur de véhicule automobile en situation dite de freinage. Elle concerne aussi un dispositif mettant en oeuvre un tel procédé de commande.

Ce procédé s'applique avantageusement aux dispositifs de transmission automatisée notamment les Boîtes à Commande Impulsionnelle dites BCI, les Boîtes à Commande Automatique dites BVA et les Boîtes de Vitesses Robotisées dites BVR, mais aussi les transmissions à rapport continu telles que les CVT (« Continuous Variable Transmission » en langue anglaise), les IVT (« Infinitely Variable Transmission » en langue anglaise) et les transmissions hybrides.

Une transmission automatisée de véhicule automobile comporte classiquement un bloc de commande recevant un ou plusieurs paramètres d'entrée interprétant entre autres, la volonté du conducteur. Puis, en fonction de la valeur de ces paramètres, le bloc de commande délivre une consigne de commande destinée aux roues du véhicule automobile.

Une évolution d'un tel bloc de commande a déjà été décrite dans le document FR-A-2827339, au nom de la Demanderesse. Ce document détaille un dispositif de contrôle du point de fonctionnement d'un groupe motopropulseur. Le contrôle réalisé par ce dispositif est un contrôle en couple appliqué aux roues du véhicule automobile. Tel que définie dans le document FR-A-2827339, la valeur du couple à appliquer aux roues du véhicule automobile, est calculée directement au niveau des roues du véhicule automobile.

Le dispositif du document FR-A-2827339 possède un module d'interprétation de la volonté du conducteur appelé module IVC.

Le module IVC génère une consigne de couple à appliquer aux roues, à destination d'un bloc d'optimisation du point de fonctionnement OPF. Ce dernier transmet ledit couple en vue d'un contrôle en couple appliqué aux roues du véhicule automobile. Le bloc OPF génère simultanément une consigne de régime moteur à partir dudit couple appliqué aux roues du véhicule automobile. On détermine cette consigne de couple à appliquer aux roues du véhicule automobile en fonction de la volonté du conducteur, des caractéristiques du véhicule automobile et de son environnement, afin d'adapter au mieux le comportement du véhicule automobile, selon les situations de conduite.

En situation de freinage, c'est-à-dire lors de l'activation de la pédale de frein du véhicule automobile, il est indispensable d'adapter la consigne de couple applicable aux roues du véhicule automobile, de manière à offrir un confort de conduite optimal au conducteur ainsi qu'une maîtrise de l'acoustique du groupe moto-propulseur. Cette adaptation doit s'effectuer durant la phase de freinage mais également lors de la réaccélération, après ladite phase de freinage.

Par exemple, pour un véhicule automobile muni d'une transmission automatique, pour actionner la pédale de frein, le conducteur doit relâcher la pédale d'accélération. La boîte de vitesse automatique qui était au préalable sur un rapport donné, passe alors directement au rapport supérieur du fait des lois de passage classiques d'une boîte de vitesse automatique. Elle prive ainsi le véhicule automobile de frein moteur. Le passage au rapport supérieur provoque alors une sensation désagréable d'embarquement du véhicule automobile. Afin de provoquer le passage au rapport inférieur, le conducteur doit enfoncer au maximum la pédale d'accélération, pour bénéficier de la fonction de rétrogradage en vue d'une réaccélération, dite fonction « kick-down ».

On connaît dans l'état de la technique, par le document US-5 514 051 déposé par Porsche un procédé consistant à régler des paramètres de conduite du véhicule automobile en fonction de paramètres prédéfinis correspondant à une situation de conduite normale. Lorsque le véhicule automobile se trouve dans un état particulier, un état de freinage par exemple, un calculateur détecte l'écart par rapport à la situation de conduite normale et règle les paramètres de conduite en fonction. Ce procédé est destiné aux véhicules automobiles équipés d'une transmission automatique

On connaît également par le document EP 0 280 757 un procédé permettant de maintenir le frein moteur avant la ré-accélération dans le cadre de véhicules automobiles équipés d'une boîte de vitesse à variations continue dite boîte CVT. Un dispositif permet de bloquer un changement de la transmission vers la réduction afin de bénéficier de frein moteur supplémentaire.

Dans le document FR-2 765 652 au nom de la Demanderesse, on propose de réaliser un dispositif de contrôle des rétrogradages en situation de freinage pour des véhicules automobiles possédant une transmission à rapports étagés. Ce contrôle permet de passer directement à un rapport inférieur si l'on détecte un régime de fonctionnement particulier, une situation de freinage par exemple, puis bloque ce rapport inférieur tant que le régime particulier est détecté.

Enfin on connaît par le document FR-2 834 939 au nom de la Demanderesse, un dispositif qui permet de pré-positionner le point de fonctionnement du groupe moto-propulseur dans une situation de freinage par exemple. On obtient ainsi une réserve de couple permettant la réaccélération en sortie de phase de freinage. La consigne de commande est calculée en couple moteur.

La présente invention a pour but de remédier aux inconvénients précités. Le principe de l'invention consiste à prévoir une adaptation de la consigne de couple à appliquer aux roues du véhicule automobile afin d'améliorer le comportement du véhicule automobile en situation de freinage. L'invention prévoit en outre une réserve de couple applicable aux roues du véhicule automobile pour aider à la relance après chaque phase de freinage. Cette adaptation est applicable directement au couple calculé au niveau de la roue comme défini précédemment, ce qui permet une plus grande précision au niveau des corrections apportées.

En outre, l'adaptation proposée par l'invention est capable de fonctionner avec tout type de transmission automatique.

À cet effet, l'invention propose un procédé de commande d'une transmission automatisée d'un groupe moto-propulseur pour véhicule automobile. Il comprend une étape d'élaboration d'une consigne de couple à appliquer à la roue, composée de deux composantes statique et dynamique élaborées en fonction de données d'entrée représentatives des caractéristiques du véhicule automobile, de la volonté du conducteur et de l'environnement du véhicule automobile. La composante statique de couple applcable aux roues du véhicule automobile fait l'objet d'une adaptation en phase de freinage et au-delà de ladite phase de freinage, en fonction d'une liste de paramètres prédéterminés, ladite adaptation en phase de freinage comprenant les étapes suivantes :
- produire une composante dynamique de couple brute représentative de la volonté du conducteur en fonction de paramètres d'entrée prédéterminés, puis la corriger pour obtenir une composante dynamique de couple,
- déterminer une composante statique de couple brute à partir de ladite composante dynamique de couple,
- calculer une composante statique de couple adaptée à une situation de freinage, en fonction de ladite composante statique de couple brute.

Ce procédé permet de générer une consigne de couple aux roues adaptée à une situation de freinage et au-delà de ladite phase de freinage. La solution proposée permet au véhicule automobile de disposer d'une réserve de couple suffisante pour permettre la reprise de l'accélération à la fin de la phase de freinage. En outre, ce procédé confère un frein moteur supérieur au véhicule automobile en situation de freinage et permet ainsi d'éviter aux passagers, la sensation d'embarquement.

De préférence, on intègre ladite composante statique de couple adaptée à une situation de freinage avec des corrections supplémentaires, fonction de la phase de conduite considérée, afin de délivrer une composante statique de couple optimale.

Selon un mode de mise en oeuvre, on peut adapter la consigne en phase de freinage et au-delà de la phase de freinage en fonction de la décélération du véhicule automobile.

Selon un mode de mise en oeuvre, on peut adapter la consigne en phase de freinage et au-delà de la phase de freinage en fonction de la vitesse du véhicule automobile.

Selon un mode de mise en oeuvre, on peut adapter la consigne en phase de freinage et au-delà de la phase de freinage en fonction du couple maximal instantané applicable aux roues du véhicule automobile.

Selon un mode de mise en oeuvre, on peut adapter la consigne en phase de freinage et au-delà en fonction d'un signal représentatif de la position de la pédale de frein du véhicule automobile.

Selon un mode de mise en oeuvre préféré, l'étape de calcul d'une composante statique de couple, adaptée à une situation de freinage comprend avantageusement les étapes suivantes :
- construire un premier signal échelon destiné à maintenir la correction en phase de freinage, et un second signal destiné à atténuer progressivement la correction en phase de freinage,
- comparer et intégrer ledit second signal avec une liste de paramètres d'entrée prédéterminés comprenant la composante statique de couple brute, du couple maximal instantané appliqué à la roue, de la vitesse du véhicule automobile et de la décélération du véhicule automobile.

L'invention a également pour objet un dispositif de commande d'une transmission automatisée d'un groupe moto-propulseur pour véhicule automobile apte à délivrer un signal de consigne de couple à appliquer aux roues du véhicule automobile comprenant deux composantes statique et dynamique élaborées en fonction de données d'entrée délivrées par un bloc d'entrée, lesdites données d'entrée comprenant une liste enregistrée de paramètres représentatifs de la volonté du conducteur, de l'état du véhicule automobile et de l'environnement du véhicule automobile. Le dispositif comprend :
- un premier bloc apte à calculer une composante dynamique de couple sans adaptation à une situation de freinage,
- un second bloc apte à calculer une composante statique de couple brute, ledit second bloc étant connecté à la sortie dudit premier bloc,
- un bloc d'adaptation à la situation de freinage délivrant une composante statique de couple adaptée à la situation de freinage en fonction d'une liste de paramètres d'entrée prédéterminés.

Selon un mode de réalisation, le dispositif peut comprendre des moyens aptes à apporter des corrections supplémentaires à ladite composante dynamique de couple brute et à ladite composante statique de couple brute.

Selon un mode de réalisation, le dispositif de commande peut comprendre des moyens aptes à intégrer la composante statique de couple adaptée à une situation de freinage avec des corrections supplémentaires fonction de la phase de conduite considérée.

La liste de paramètres prédéterminés du bloc d'adaptation à la situation de freinage comprend avantageusement des signaux représentatifs de la composante statique de couple brute, du couple maximal instantané applicable aux roues du véhicule automobile, de la vitesse du véhicule automobile, de la décélération du véhicule automobile, et des signaux représentatifs de la pédale de frein du véhicule automobile.

Selon un mode de réalisation, le bloc d'adaptation à la situation de freinage de la composante statique de couple brute peut comprendre :
- un module apte à construire un premier signal échelon destiné à maintenir la correction en phase de freinage, et un second signal destiné à atténuer progressivement la correction au-delà de la phase de freinage,
- des moyens aptes à mémoriser une première cartographie pour délivrer une consigne de pondération en fonction de la vitesse du véhicule automobile,
- des moyens aptes à mémoriser une seconde cartographie pour calculer un pourcentage de l'écart entre le couple maximal instantané applicable aux roues du véhicule automobile et la composante statique de couple brute, en fonction de la décélération du véhicule automobile,
- des moyens de comparaison et d'intégration dudit second signal destiné à atténuer progressivement la correction en phase de freinage, avec des signaux représentatifs de la composante statique brute de couple, du couple maximal instantané applicable aux roues du véhicule automobile, de la vitesse du véhicule automobile et de la décélération du véhicule automobile.

D'autres avantages et caractéristiques de l'invention apparaîtront à l'examen de la description détaillée d'un mode de réalisation de l'invention nullement limitatif, et des dessins annexés, sur lesquels :
- la figure 1 est un schéma synoptique d'un exemple de réalisation d'un module IVC intégrant l'adaptation de la consigne en phase de freinage,
- la figure 2 représente plus précisément un exemple de réalisation d'un détail du schéma de la figure 1,
- la figure 3 illustre un exemple des signaux délivrés par un bloc du schéma représenté sur la figure 2.

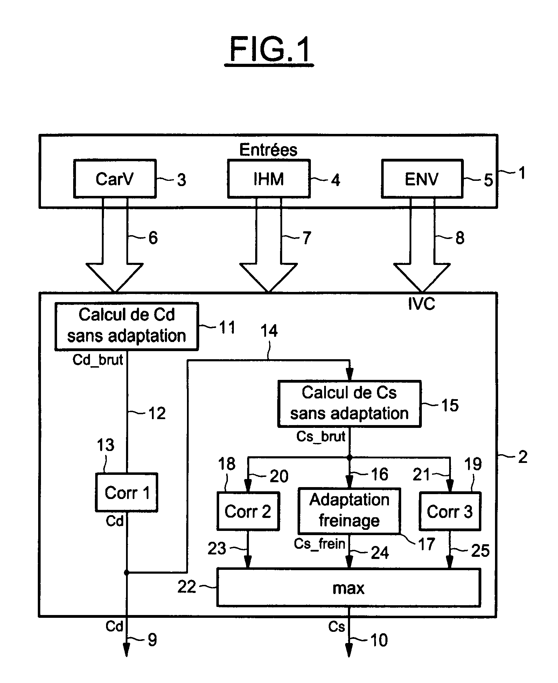

On se réfère à la figure 1. On a représenté sur cette figure l'intégration du dispositif d'adaptation de la consigne de couple à appliquer aux roues du véhicule automobile en phase de freinage, dans la transmission automatisée du véhicule automobile (non représentée).

Ce dispositif comprend deux blocs 1 et 2, respectivement un bloc d'entrées 1 et un module 2 IVC.

Le bloc d'entrée 1 a pour fonction de délivrer les paramètres d'entrée au module 2 pour le réglage de la consigne de couple à appliquer aux roues du véhicule automobile, en phase de freinage. Le bloc 1 reçoit en entrée des signaux délivrés par des capteurs intégrés au véhicule automobile (non représentés).

Ces données d'entrée, transmises au module 2 par le bloc 1, peuvent être délivrées respectivement à chaque bloc fonctionnel inclus dans ce module 2.

Le bloc d'entrée 1 comprend trois modules 3, 4 et 5. Chacun de ces trois modules délivre au module 2 un type de données d'entrée prédéterminé.

Un premier module 3 noté CarV est capable d'élaborer les données concernant les caractéristiques du véhicule automobile. Celles-ci sont programmées et mémorisées dans une mémoire commune au dispositif (non représentée). Ces données sont définies par le constructeur du véhicule automobile pour caractériser le comportement du véhicule automobile.

Un deuxième module 4 noté IHM (interface homme/machine) est capable d'élaborer des données concernant la volonté du conducteur. Ces données interprètent les souhaits du conducteur. Elles peuvent comprendre par exemple des signaux représentatifs de la pédale de frein ou d'accélération du véhicule automobile ou encore un signal représentant la sportivité du conducteur.

Un troisième module noté 5 ENV est capable d'élaborer des signaux concernant l'environnement du véhicule automobile. Ces derniers permettent de tenir compte de l'état du véhicule automobile et de sa situation dans l'environnement. Ils comprennent par exemple des signaux correspondant au régime moteur du véhicule automobile, à la vitesse du véhicule automobile, ou encore à la décélération courante du véhicule automobile, particulièrement en situation de freinage.

Les signaux délivrés par les trois modules 3, 4 et 5 sont élaborés à partir des signaux provenant des capteurs intégrés au véhicule automobile (non représentés).

Ces trois modules 3, 4 et 5 sont respectivement connectés au module 2 IVC par l'intermédiaire des connexions 6, 7 et 8.

Le module 2 IVC, décrit dans le document FR-A-2 827 339, au nom de la Demanderesse, représente un bloc apte à générer une consigne de couple à appliquer aux roues du véhicule automobile en interprétant la volonté du conducteur.

Le module 2 reçoit en entrée les paramètres d'entrée élaborés par le bloc 1 et délivre en sortie les composantes dynamique Cd (ou Consigne de couple dynamique) et statique Cs (ou Consigne de couple statique) de la consigne de couple à appliquer aux roues du véhicule automobile. Les deux consignes sont respectivement transmises par l'intermédiaire des connexions 9 et 10. Les consignes Cd et Cs alimentent un module d'optimisation OPF, décrit dans le document FR-A-2 827 339, permettant de déterminer le régime moteur optimal du moteur thermique du groupe moto-propulseur.

La consigne de couple dynamique Cd est la valeur du couple que le conducteur souhaite voir réalisé instantanément. La consigne de couple statique Cs se définit comme le couple dynamique-cible que le conducteur pourrait demander et que le groupe motopropulseur devrait rendre immédiatement disponible au niveau des roues du véhicule automobile. La consigne Cs évolue lentement. En effet, elle n'a pas pour but de répondre à une demande immédiate du conducteur. Elle doit être le reflet d'une tendance imposée par le comportement du conducteur depuis une période prédéterminée. En d'autres termes, le couple Cs correspond à la valeur de couple applicable aux roues du véhicule automobile que le conducteur souhaiterait obtenir en rechargeant la pédale d'accélération du véhicule automobile.

Selon l'invention, le module 2, comprend trois blocs fonctionnels 11, 15 et 17.

Le premier bloc fonctionnel est un bloc 11 (Calcul de Cd sans adaptation) apte à calculer une consigne de couple dynamique sans adaptation notée Cd_brut. Cette consigne Cd_brut est calculée notamment à partir des signaux représentatifs de la position de la pédale d'accélérateur du véhicule automobile, du régime du moteur thermique du véhicule automobile et de la vitesse du véhicule automobile ; ces signaux étant délivrés par le bloc d'entrée 1. Par convention, en marche avant, le couple Cd prend une valeur négative pour faire décélérer le véhicule automobile.

La consigne Cd_brut peut subir des corrections supplémentaires, par exemple une adaptation de la consigne en situation de pente. Pour cela, la consigne Cd_brut est transmise par l'intermédiaire de la connexion 12 à un bloc correctif 13 noté Corr1, qui délivre en sortie la consigne Cd.

Le second bloc fonctionnel est un bloc 15 (Calcul de Cs sans adaptation) qui est capable de calculer une consigne de couple statique Cs_brut sans adaptation particulière. La consigne Cs_brut est construite à partir du couple dynamique Cd, issu du bloc correctif 13 et transmise par la connexion 14. En outre, la consigne Cs_brut est calculée en fonction de paramètres comme la sportivité du conducteur par exemple ; ce paramètre peut être calculé à partir du signal représentatif de la position de la pédale d'accélération du véhicule automobile, délivré par le bloc d'entrée 1.

La consigne Cs_brut est délivrée, par l'intermédiaire de la connexion 16 au troisième bloc fonctionnel 17 intégré au module 2, qui est le bloc d'adaptation à une situation de freinage. Le bloc 17 (Adaptation freinage) a pour fonction d'élaborer, à partir de la consigne Cs_brut, une consigne de couple applicable aux roues du véhicule automobile, adaptée à la situation de freinage Cs_frein. Dans le cas où le véhicule est en marche avant, la consigne Cs_brut est positive. La consigne Cs_frein délivrée par le bloc 17 donne la possibilité d'améliorer le point de fonctionnement du groupe moto-propulseur du véhicule automobile. En effet, le point de fonctionnement va permettre de pré-positionner la valeur du régime du moteur thermique à une valeur anticipant la volonté du conducteur. Le bloc 17 sera décrit plus en détail ci-après.

Parallèlement à l'adaptation à la situation de freinage, la consigne Cs_brut peut subir d'autres corrections, par exemple en situation de virage ou de pente. Ces corrections supplémentaires sont effectuées respectivement par les deux blocs correctifs 18 Corr2 et 19 Corr3. La consigne Cs_brut leur est transmise aux blocs 18 et 19 par les connexions respectives 20 et 21.

Les trois blocs 17, 18 et 19 délivrent leurs consignes de sortie au bloc 22 noté max. Le bloc 18 délivre sa consigne au bloc 22 par une connexion 23, le bloc 17 par une connexion 24 et le bloc 19 par une connexion 25.

Le bloc 22, placé en sortie des blocs 17, 18 et 19, arbitre les différentes corrections opérées par ces trois blocs. En effet, la consigne Cs peut comprendre à la fois une adaptation en freinage et une adaptation en virage par exemple. Le bloc 22 délivre alors en sortie une consigne de sortie Cs intégrant les différentes corrections apportées.

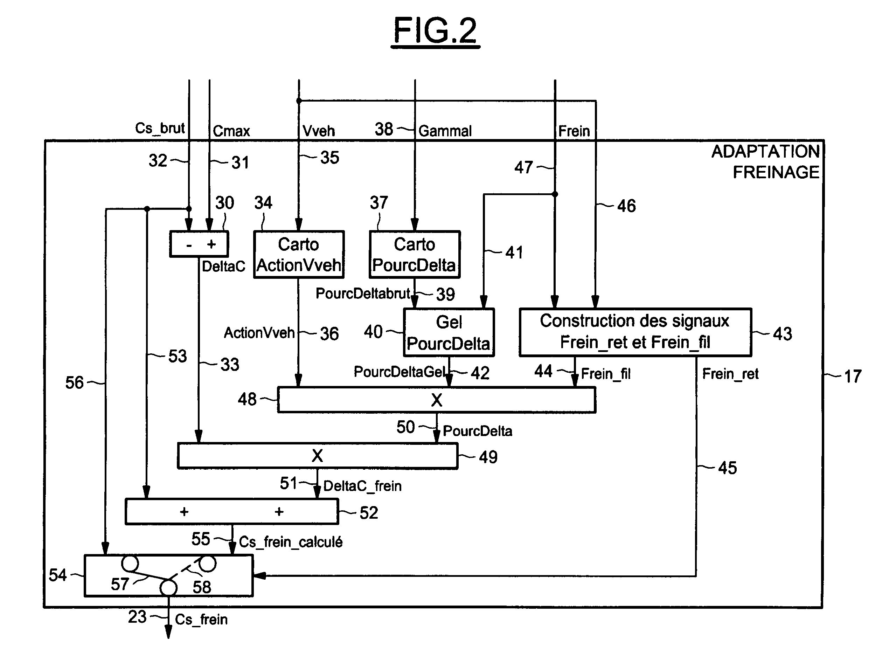

On se réfère maintenant à la figure 2. Cette figure détaille le bloc 17 réalisant l'adaptation de la consigne Cs_brut en phase de freinage.

Le bloc 17 reçoit différents paramètres d'entrée tels que la vitesse du véhicule automobile notée Vveh, le signal représentatif de la pédale de frein noté Frein, et la décélération courante notée Gammal. La décélération courante du véhicule automobile peut être mesurée par un accéléromètre intégré au véhicule automobile, mais également calculée à partir de la vitesse du véhicule automobile. Tous ces paramètres d'entrée proviennent du bloc d'entrée 1, représenté sur la figure 1, et délivrés aux différents blocs inclus dans le module 2.

Le bloc 17 reçoit également Cs_brut issue du bloc 15 (Calcul de Cs sans adaptation), ainsi que la composante Cmax qui est le couple maximum applicable aux roues du véhicule automobile, que le groupe moto-propulseur peut fournir aux roues du véhicule automobile. Cette composante Cmax est produite à l'aide d'une table enregistrée (non représentée) qui est adressée, dans un mode préféré de réalisation, en fonction de la vitesse de rotation mesurée à la roue du véhicule automobile. La valeur Cmax évolue donc dynamiquement en fonction de la vitesse du véhicule automobile.

Le bloc 17 comprend plusieurs blocs fonctionnels permettant la construction de la consigne Cs_frein.

En premier lieu, le bloc 17 comprend un soustracteur 30, dont le rôle est d'effectuer la différence entre la composante Cmax, délivrée par l'intermédiaire de la connexion 31, et la consigne Cs_brut délivrée par la connexion 32. La différence, notée DeltaC, est délivrée en sortie du soustracteur 30 par l'intermédiaire d'une connexion 33.

Une cartographie 34 (Carto ActionVeh) est placée parallèlement au soustracteur 30, et reçoit en entrée la vitesse du véhicule automobile Vveh par une connexion 35. La cartographie 34 élabore une pondération notée ActionVveh, prenant des valeurs entre « 0 » et « 1 » et délivrée par la connexion 36. La cartographie 34 n'est activée, c'est-à-dire que les valeurs de ActionVveh sont strictement inférieures à « 1 », uniquement lorsque la vitesse du véhicule automobile est inférieure à un seuil prédéterminé. Le signal ActionVveh permet d'annuler la correction en phase de freinage à partir d'un seuil adapté, déterminé par la cartographie 34. Le signal ActionVveh assure alors une disparition progressive du filtrage en fonction de la variation de la vitesse du véhicule automobile.

Une deuxième cartographie 37 (Carto PourcDelta) située parallèlement au bloc 30, reçoit en entrée, par une connexion 38, une valeur de décélération courante notée Gammal. La cartographie 37 délivre en sortie, par la connexion 39, une variable notée PourcDeltabrut. Cette variable est un pourcentage brut de l'écart entre la consigne Cs_brut et la composante C_max. Cet écart entre la consigne Cs_brut et la composante C_max est la variable DeltaC, qui a été calculée par le bloc 30.

Un bloc 40 (Gel PourcDelta) situé en sortie du bloc 37 a pour fonction de mettre à jour le pourcentage PourcDeltabrut en période de freinage ou de le geler hors de la période de freinage. Pour ce faire, le bloc 40 reçoit en entrée la variable PourcDeltabrut par la connexion 39 et le signal représentatif de la position de la pédale de frein, Frein, par une connexion 41. Le bloc 40 délivre en sortie une variable notée PourcDeltaGel par une connexion 42, cette variable PourcDeltaGel représentant le pourcentage PourcDeltabrut gelé ou mis à jour.

Un bloc 43 (Construction des signaux Frein_ret et Frein_fil) construit deux signaux Frein_fil transmis en sortie par une connexion 44 et Frein_ret transmis en sortie par une connexion 45. Ces deux signaux Frein_fil et Frein_ret sont construits à partir de la vitesse du véhicule automobile Vveh, transmis par une connexion 46 et le signal représentatif de la position de la pédale de frein du véhicule automobile, transmis par une connexion 47.

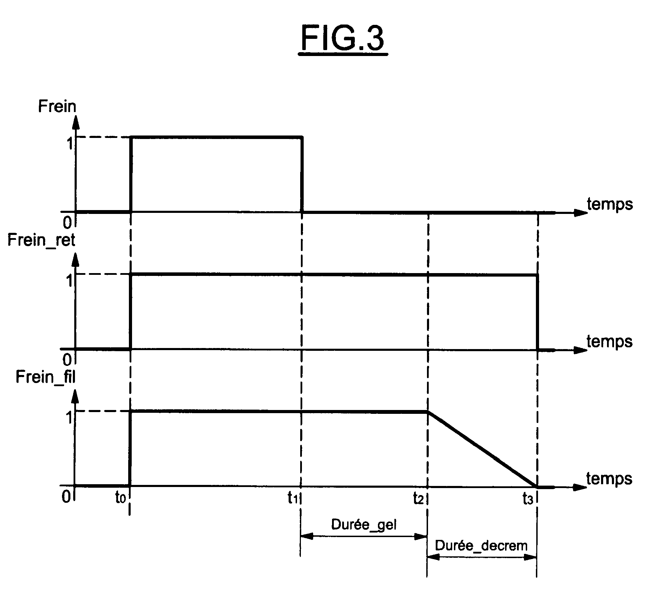

La variation des deux signaux Frein_fil et Frein_ret est représentée sur la figure 3 en fonction du temps. On considère que le signal Frein est un échelon prenant la valeur « 1 » entre t0 et t1 (la pédale de frein est activée) et « 0 » sinon (la pédale de frein est inactivée). Le signal Frein_ret permet de maintenir la correction entre t1 et t3, soit pendant une durée totale égale à Durée_gel+Durée_decrem, après la disparition du signal Frein en t1. Le signal Frein_fil permet quant à lui, d'estomper progressivement l'effet de la correction. Ainsi, le signal Frein_fil prend la valeur « 1 » en t0 jusqu'à t2 puis décroît progressivement, par exemple sous forme d'une rampe linéaire, entre t2 et t3, soit pendant une durée Durée_decrem. Les deux variables Durée_gel et Durée_decrem sont deux variables calibrables par le constructeur. Elles peuvent représenter une durée, comme sur l'exemple de la figure 3, ou une distance parcourue par le véhicule automobile (en intégrant la vitesse du véhicule automobile).

On se réfère de nouveau à la figure 2. Le signal Frein_fil est transmis à un premier multiplieur 48 par la connexion 44. Le multiplieur 48 est situé en sortie du bloc 43. Il reçoit les signaux ActionVveh et PourcDeltaGel respectivement par les connexions 36 et 42. Le signal PourcDelta résultant de la multiplication des trois signaux d'entrée, Frein_fil, ActionVveh et PourcDeltaGel, représente le pourcentage de la variation de couple à appliquer aux roues du véhicule automobile que l'on souhaite réellement appliquer.

Un second multiplieur 49 est placé en sortie du premier multiplieur 48. Le multiplieur 49 reçoit la variable PourcDelta calculée précédemment et transmise par une connexion 50. Le multiplieur 49, reçoit par la connexion 33, la variable DeltaC délivrée par le bloc 30. En multipliant les deux variables PourcDelta et DeltaC, le multiplieur 49 délivre en sortie, par une connexion 51, le signal DeltaC_frein qui représente la quantité supplémentaire (en valeur algébrique) de couple applicable aux roues du véhicule automobile que l'on désire pouvoir appliquer en phase de freinage et au-delà.

Un additionneur 52 situé en sortie du multiplieur 49 reçoit en entrée, la variable DeltaC_frein précitée, par la connexion 51, ainsi que le couple Cs_brut, par une connexion 53. De la somme des deux signaux DeltaC_frein et Cs_brut, résulte la consigne Cs_frein_calculé, qui est le couple statique destiné à être appliqué aux roues du véhicule automobile en phase de freinage et au-delà.

Un sélecteur 54 est placé en sortie de l'additionneur 52. Le multiplexeur 54 reçoit en entrée, la consigne Cs_frein_calculé, transmise par une connexion 55 et la consigne de couple Cs_brut transmise par une connexion 56. Le sélecteur 54 reçoit également un signal de commande qui est le signal Frein_ret élaboré par le bloc 43, transmis par la connexion 45. En fonction du signal de commande Frein_ret, le sélecteur 54 est apte à délivrer un signal de sortie correspondant à l'un ou l'autre de ces signaux d'entrée.

En fonction de la valeur de Frein_ret, le sélecteur 54 se trouve dans l'une des configurations représentées sur la figure 2. Si « Frein_ret=0 », la correction en phase de freinage n'est pas appliquée. Le sélecteur 54 établit une connexion entre l'entrée où est transmis le signal Cs_brut et sa borne de sortie afin de délivrer la consigne Cs_brut en sortie. Si « Vir_ret=0 », le véhicule automobile se trouve dans une deuxième configuration où le conducteur actionne où vient d'actionner la pédale de frein. On délivre alors la consigne de couple à appliquer aux roues comprenant la correction calculée pour une situation de freinage. Le sélecteur 54 établit une connexion 58 entre l'entrée où est transmise le signal Cs_frein_calculé et sa sortie, afin de délivrer la consigne Cs_frein_calculé en sortie. Celle-ci est appliquée tant que le signal de commande Frein_ret est égal à « 1 ».

La composante statique Cs de couple ainsi augmentée, par la composante Delta_C_frein, apporte plusieurs avantages en situation de freinage et au-delà. Elle permet de pré-positionner le groupe moto-propulseur sur un point de fonctionnement, offrant ainsi une plus grande réserve de couple applicable à la roue de véhicule automobile, ce qui permet au véhicule automobile d'accélérer plus rapidement après la phase de freinage en cas de demande. En effet, pour obtenir la réserve de couple applicable à la roue de véhicule automobile, le groupe moto-propulseur se positionne sur un point de fonctionnement en régime moteur (élaboré en fonction de la consigne de couple à appliquer à la roue du véhicule automobile) supérieur à ce qu'il aurait été sans cette demande augmentée. Il en résulte un effet acoustique connu du conducteur lors de rétrogradages en phase de freinage et surtout, cela empêche le régime moteur de descendre rapidement à des valeurs faibles en phase de freinage, ce à quoi le conducteur n'est pas habitué.

## Revendications

1. Procédé de commande d'une transmission automatisée d'un groupe moto-propulseur pour véhicule automobile comprenant une étape d'élaboration d'une consigne de couple à appliquer à la roue, composée de deux composantes statique (Cs) et dynamique (Cd) élaborées en fonction de données d'entrée représentatives des caractéristiques du véhicule automobile, de la volonté du conducteur et de l'environnement du véhicule automobile, **caractérisé par le fait que** la composante statique (Cs) de couple applicable aux roues du véhicule automobile fait l'objet d'une adaptation en phase de freinage et au-delà de ladite phase de freinage, en fonction d'une liste de paramètres prédéterminés, ladite adaptation en phase de freinage comprenant les étapes suivantes :
- produire une composante dynamique de couple brute (Cd_brut) représentative de la volonté du conducteur en fonction de paramètres d'entrée prédéterminés, puis la corriger pour obtenir une composante dynamique de couple (Cd),
- déterminer une composante statique de couple brute (Cs_brut) à partir de ladite composante dynamique de couple (Cd),
- calculer une composante statique de couple adaptée à une situation de freinage (Cs_frein), en fonction de ladite composante statique de couple brute (Cs_brut).

2. Procédé selon la revendication 1, **caractérisé par le fait que** l'on intègre ladite composante statique de couple adaptée à une situation de freinage (Cs_frein) avec des corrections supplémentaires, fonction de la phase de conduite considérée, afin de délivrer une composante statique de couple optimale (Cs).

3. Procédé selon l'une quelconque des revendications précédentes, **caractérisé par le fait que** l'on adapte la consigne en phase de freinage et au-delà de la phase de freinage en fonction de la décélération du véhicule automobile (Gammal).

4. Procédé selon l'une quelconque des revendications 1 à 3, **caractérisé par le fait que** l'on adapte la consigne en phase de freinage et au-delà de la phase de freinage en fonction de la vitesse du véhicule automobile (Vveh).

5. Procédé selon l'une quelconque des revendications 1 à 4, **caractérisé par le fait que** l'on adapte la consigne en phase de freinage et au-delà de la phase de freinage en fonction du couple maximal instantané (Cmax) applicable aux roues du véhicule automobile.

6. Procédé selon l'une quelconque des revendications 1 à 5, **caractérisé par le fait que** l'on adapte la consigne en phase de freinage et au-delà en fonction d'un signal représentatif de la position de la pédale de frein du véhicule automobile (Frein).

7. Procédé selon l'une quelconque des revendications précédentes, **caractérisé par le fait que** l'étape de calcul d'une composante statique de couple (Cs), adaptée à une situation de freinage comprend les étapes suivantes :
- construire un premier signal échelon destiné à maintenir la correction en phase de freinage (Frein_ret), et un second signal (Frein_fil) destiné à atténuer progressivement la correction en phase de freinage,
- comparer et intégrer ledit second signal avec une liste de paramètres d'entrée prédéterminés comprenant la composante statique de couple brute (Cs_brut), du couple maximal instantané applicable à la roue (Cmax), de la vitesse du véhicule automobile (Vveh) et de la décélération du véhicule automobile (Gammal).

8. Dispositif de commande d'une transmission automatisée d'un groupe moto-propulseur pour véhicule automobile apte à délivrer un signal de consigne de couple à appliquer aux roues du véhicule automobile comprenant deux composantes statique (Cs) et dynamique (Cd) élaborées en fonction de données d'entrée délivrées par un bloc d'entrée (1), lesdites données d'entrée comprenant une liste enregistrée de paramètres représentatifs de la volonté du conducteur, de l'état du véhicule automobile et de l'environnement du véhicule automobile, **caractérisé en ce qu'**il comprend :
- un premier bloc (11) apte à calculer une composante dynamique de couple brute (Cd_brut),
- un second bloc (15) apte à calculer une composante statique de couple brute (Cs_brut), ledit second bloc étant connecté à la sortie dudit premier bloc (11),
- un bloc d'adaptation à la situation de freinage (17) délivrant une composante statique de couple adaptée à la situation de freinage (Cs_frein) en fonction d'une liste de paramètres d'entrée prédéterminés.

9. Dispositif de commande selon la revendication 8, **caractérisé par le fait qu'**il comprend des moyens (Corr1, Corr2, Corr3) aptes à apporter des corrections supplémentaires à ladite composante dynamique de couple brute (Cd_brut) et à ladite composante statique de couple brute (Cs_brut).

10. Dispositif de commande selon la revendication 9, **caractérisé par le fait qu'**il comprend des moyens (max) aptes à intégrer la composante statique de couple adaptée à une situation de freinage (Cs_frein) avec des corrections supplémentaires fonction de la phase de conduite considérée.

11. Dispositif de commande selon l'une quelconque des revendications 8 à 10, **caractérisé par le fait que** la liste de paramètres prédéterminés du bloc d'adaptation à la situation de freinage comprend des signaux représentatifs de la composante statique de couple brute (Cs_brut), du couple maximal (Cmax) applicable aux roues du véhicule automobile, de la vitesse du véhicule automobile (Vveh), de la décélération (Gammal) du véhicule automobile, et des signaux représentatifs de la pédale de frein du véhicule automobile (Frein).

12. Dispositif de commande selon l'une quelconque des revendications 8 à 11, **caractérisé par le fait que** le bloc d'adaptation à la situation de freinage (17) de la composante statique de couple brute (Cs_brut) comprend :
- un module apte à construire un premier signal échelon (Frein_ret) destiné à maintenir la correction en phase de freinage, et un second signal (Frein_fil) destiné à atténuer progressivement la correction au-delà de la phase de freinage,
- des moyens aptes à mémoriser une première cartographie (34) pour délivrer une consigne de pondération (ActionVveh) en fonction de la vitesse du véhicule automobile (Vveh),
- des moyens aptes à mémoriser une seconde cartographie (37) pour calculer un pourcentage (PourcDeltabrut) de l'écart (DeltaC) entre le couple maximal (Cmax) instantané applicable aux roues du véhicule automobile et la composante statique de couple brute (Cs_brut), en fonction de la décélération du véhicule automobile (Gammal),
- des moyens de comparaison et d'intégration (max) dudit second signal (Frein_fil) destiné à atténuer progressivement la correction en phase de freinage, avec des signaux représentatifs de la composante statique brute de couple (Cs_brut), du couple maximal instantané (Cmax) applicable aux roues du véhicule automobile, de la vitesse (Vveh) du véhicule automobile et de la décélération (Gammal) du véhicule automobile.

## Claims

1. Method of controlling an automated transmission of a power train for a motor vehicle comprising a step of formulating a torque setpoint to be applied to the wheel, composed of two components, static (Cs) and dynamic (Cd), formulated as a function of input data representative of the characteristics of the motor vehicle, of the desire of the driver and of the environment of the motor vehicle, **characterized in that** the static component (Cs) of torque applicable to the wheels of the motor vehicle forms the subject of an adaptation in the braking phase and beyond said braking phase, as a function of a list of predetermined parameters, said adaptation in the braking phase comprising the following steps:
- produce a dynamic component of raw torque (Cd_raw) representative of the desire of the driver as a function of predetermined input parameters, then correct it to obtain a dynamic torque component (Cd),
- determine a static component of raw torque (Cs_raw) on the basis of said dynamic torque component (Cd),
- calculate a static torque component adapted to a braking situation (Cs_brake), as a function of said static component of raw torque (Cs_raw).

2. Method according to Claim 1, **characterized in that** said static torque component adapted to a braking situation (Cs_brake) is integrated with additional corrections, dependent on the driving phase considered, so as to deliver a static component of optimal torque (Cs) .

3. Method according to any one of the preceding claims, **characterized in that** the setpoint in the braking phase and beyond the braking phase is adapted as a function of the deceleration of the motor vehicle (Gamma1).

4. Method according to any one of Claims 1 to 3, **characterized in that** the setpoint in the braking phase and beyond the braking phase is adapted as a function of the speed of the motor vehicle (Vveh).

5. Method according to any one of Claims 1 to 4, **characterized in that** the setpoint in the braking phase and beyond the braking phase is adapted as a function of the instantaneous maximum torque (Cmax) applicable to the wheels of the motor vehicle.

6. Method according to any one of Claims 1 to 5, **characterized in that** the setpoint in the braking phase and beyond is adapted as a function of a signal representing the position of the brake pedal of the motor vehicle (Brake).

7. Method according to any one of the preceding claims, **characterized in that** the step of calculating the static torque component (Cs) adapted to a braking situation comprises the following steps:
- construct a first step signal intended to maintain the correction in the braking phase (Brake_del), and a second signal (Brake_fil) intended to progressively attenuate the correction in the braking phase,
- compare and integrate said second signal with a list of predetermined input parameters comprising the static component of raw torque (Cs_raw), the instantaneous maximum torque applicable to the wheel (Cmax), the speed of the motor vehicle (Vveh) and the deceleration of the motor vehicle (Gamma1).

8. Device for controlling an automated transmission of a power train for a motor vehicle able to deliver a torque setpoint signal to be applied to the wheels of the motor vehicle, comprising two components, static (Cs) and dynamic (Cd), formulated as a function of input data delivered by an input block (1), said input data comprising a recorded list of parameters representative of the desire of the driver, of the state of the motor vehicle and of the environment of the motor vehicle, **characterized in that** it comprises:
- a first block (11) able to calculate a dynamic component of raw torque (Cd_raw),
- a second block (15) able to calculate a static component of raw torque (Cs_raw), said second block being connected to the output of said first block (11),
- a block for adaptation to the braking situation (17) delivering a static torque component adapted to the braking situation (Cs_brake) as a function of a list of predetermined input parameters.

9. Control device according to Claim 9,
**characterized in that** it comprises means (Corr1, Corr2, Corr3) able to make additional corrections to said dynamic component of raw torque (Cd_raw) and to said static component of raw torque (Cs_raw).

10. Control device according to Claim 9,
**characterized in that** it comprises means (max) able to integrate the static torque component adapted to a braking situation (Cs_brake) with additional corrections dependent on the driving phase considered.

11. Control device according to any one of Claims 8 to 10, **characterized in that** the list of predetermined parameters of the block for adaptation to the braking situation comprises signals representing the static component of raw torque (Cs_raw), the maximum torque (Cmax) applicable to the wheels of the motor vehicle, the speed of the motor vehicle (Vveh), the deceleration (Gamma1) of the motor vehicle and signals representing the brake pedal of the motor vehicle (Brake).

12. Device according to any one of Claims 8 to 11, **characterized in that** the block for adaptation to the braking situation (17) of the static component of raw torque (Cs_raw) comprises:
- a module able to construct a first step signal (Brake_del) intended to maintain the correction in the braking phase, and a second signal (Brake_fil) intended to progressively attenuate the corrrection beyond the braking phase,
- means able to store a first mapping (34) so as to deliver a weighting setpoint (ActionVveh) as a function of the speed of the motor vehicle (Vveh),
- means able to store a second mapping (37) so as to calculate a percentage (PercDeltaraw) of the deviation (DeltaC) between the instantaneous maximum torque (Cmax) applicable to the wheels of the motor vehicle and the static component of raw torque (Cs_raw), as a function of the deceleration of the motor vehicle (Gamma1),
- means for comparing and for integrating (max) said second signal (Brake_fil) intended to progressively attenuate the correction in the braking phase, with signals representing the raw static torque component (Cs_raw), the instantaneous maximum torque (Cmax) applicable to the wheels of the motor vehicle, the speed (Vveh) of the motor vehicle and the deceleration (Gamma1) of the motor vehicle.

## Patentansprüche

1. Verfahren zur Steuerung eines automatisierten Getriebes einer Antriebseinheit für ein Kraftfahrzeug, das einen Schritt der Erarbeitung eines an das Rad anzuwendenden Drehmoment-Sollwerts aufweist, das aus zwei Komponenten, einer statischen (Cs) und einer dynamischen (Cd), besteht, die in Abhängigkeit von Eingangsdaten erarbeitet werden, die für die Merkmale des Kraftfahrzeugs, den Willen des Fahrers und die Umgebung des Kraftfahrzeugs repräsentativ sind, **dadurch gekennzeichnet, dass** die an die Räder des Kraftfahrzeugs anwendbare statische Drehmomentkomponente (Cs) Gegenstand einer Anpassung in der Bremsphase und über die Bremsphase hinaus in Abhängigkeit von einer Liste vorbestimmter Parameter ist, wobei die Anpassung in der Bremsphase die folgenden Schritte aufweist:
- Erzeugung einer unbearbeiteten dynamischen Drehmomentkomponente (Cd_brut), die für den Willen des Fahrers in Abhängigkeit von vorbestimmten Eingangsparametern repräsentativ ist, dann ihre Korrektur, um eine dynamische Drehmomentkomponente (Cd) zu erhalten,
- Bestimmung einer unbearbeiteten statischen Drehmomentkomponente (Cs_brut) ausgehend von der dynamischen Drehmomentkomponente (Cd),
- Berechnung einer an eine Bremssituation angepassten statischen Drehmomentkomponente (Cs_frein) in Abhängigkeit von der unbearbeiteten statischen Drehmomentkomponente (Cs_brut).

2. Verfahren nach Anspruch 1, **dadurch gekennzeichnet, dass** die an eine Bremssituation angepasste statische Drehmomentkomponente (Cs_frein) mit von der betrachteten Fahrsituation abhängigen zusätzlichen Korrekturen integriert wird, um eine optimale statische Drehmomentkomponente (Cs) zu liefern.

3. Verfahren nach einem der vorhergehenden Ansprüche, **dadurch gekennzeichnet, dass** der Sollwert in der Bremsphase und über die Bremsphase hinaus in Abhängigkeit von der Verlangsamung (Gamma1) des Kraftfahrzeugs angepasst wird.

4. Verfahren nach einem der Ansprüche 1 bis 3,
**dadurch gekennzeichnet, dass** der Sollwert in der Bremsphase und über die Bremsphase hinaus in Abhängigkeit von der Geschwindigkeit des Kraftfahrzeugs (Vveh) angepasst wird.

5. Verfahren nach einem der Ansprüche 1 bis 4,
**dadurch gekennzeichnet, dass** der Sollwert in der Bremsphase und über die Bremsphase hinaus in Abhängigkeit vom maximalen augenblicklichen Drehmoment (Cmax) angepasst wird, das an die Räder des Kraftfahrzeugs anwendbar ist.

6. Verfahren nach einem der Ansprüche 1 bis 5,
**dadurch gekennzeichnet, dass** der Sollwert in der Bremsphase und darüber hinaus in Abhängigkeit von einem Signal angepasst wird, das für die Position des Bremspedals (Frein) des Kraftfahrzeugs repräsentativ ist.

7. Verfahren nach einem der vorhergehenden Ansprüche,
**dadurch gekennzeichnet, dass** der Schritt der Berechnung einer an eine Bremssituation angepassten statischen Drehmomentkomponente (Cs) die folgenden Schritte aufweist:
- Bildung eines ersten Stufensignals, das dazu bestimmt ist, die Korrektur in der Bremsphase (Frein_ret) aufrechtzuerhalten, und eines zweiten Signals (Frein_fil), das dazu bestimmt ist, die Korrektur in der Bremsphase progressiv zu mindern,
- Vergleich und Integration des zweiten Signals mit einer Liste vorbestimmter Eingangsparameter, die die unbearbeitete statische Drehmomentkomponente (Cs_brut), das an das Rad anwendbare augenblickliche maximale Drehmoment (Cmax), die Geschwindigkeit des Kraftfahrzeugs (Vveh) und die Verlangsamung des Kraftfahrzeugs (Gamma1) enthält.

8. Vorrichtung zur Steuerung eines automatisierten Getriebes einer Antriebseinheit für ein Kraftfahrzeug, die ein an die Räder des Kraftfahrzeugs anzuwendendes Drehmoment-Sollwertsignal liefern kann, das zwei Komponenten, eine statische (Cs) und eine dynamische (Cd), enthält, die in Abhängigkeit von von einem Eingangsblock (1) gelieferten Eingangsdaten erarbeitet werden, wobei die Eingangsdaten eine gespeicherte Liste von Parametern aufweisen, die für den Willen des Fahrers, den Zustand des Kraftfahrzeugs und die Umgebung des Kraftfahrzeugs repräsentativ sind, **dadurch gekennzeichnet, dass** sie aufweist:
- einen ersten Block (11), der eine unbearbeitete dynamische Drehmomentkomponente (Cd_brut) berechnen kann,
- einen zweiten Block (15), der eine unbearbeitete statische Drehmomentkomponente (Cs_brut) berechnen kann, wobei der zweite Block mit dem Ausgang des ersten Blocks (11) verbunden ist,
- einen Block (17) der Anpassung an die Bremssituation, der eine an die Bremssituation (Cs_frein) angepasste statische Drehmomentkomponente in Abhängigkeit von einer Liste vorbestimmter Eingangsparameter liefert.

9. Steuervorrichtung nach Anspruch 8, **dadurch gekennzeichnet, dass** sie Mittel (Corr1, Corr2, Corr3) aufweist, die an der unbearbeiteten dynamischen Drehmomentkomponente (Cd_brut) und an der unbearbeiteten statischen Drehmomentkomponente (Cs_brut) zusätzliche Korrekturen vornehmen können.

10. Steuervorrichtung nach Anspruch 9, **dadurch gekennzeichnet, dass** sie Mittel (max) aufweist, die die an eine Bremssituation (Cs_frein) angepasste statische Drehmomentkomponente mit zusätzlichen Korrekturen integrieren können, die von der betrachteten Fahrphase abhängen.

11. Steuervorrichtung nach einem der Ansprüche 8 bis 10, **dadurch gekennzeichnet, dass** die Liste vorbestimmter Parameter des Blocks zur Anpassung an die Bremssituation Signale, die für unbearbeitete statische Drehmomentkomponente (Cs_brut), das an die Räder des Kraftfahrzeugs anwendbare maximale Drehmoment (Cmax), die Geschwindigkeit des Kraftfahrzeugs (Vveh), die Verlangsamung (Gamma1) des Kraftfahrzeugs repräsentativ sind, und Signale aufweist, die für das Bremspedal des Kraftfahrzeugs (Frein) repräsentativ sind.

12. Steuervorrichtung nach einem der Ansprüche 8 bis 11, **dadurch gekennzeichnet, dass** der Block (17) zur Anpassung der unbearbeiteten statischen Drehmomentkomponente (Cs_brut) an die Bremssituation aufweist:
- ein Modul, das ein erstes Stufensignal (Frein_ret), das dazu bestimmt ist, die Korrektur in der Bremsphase aufrechtzuerhalten, und ein zweites Signal (Frein_fil) bilden kann, das dazu bestimmt ist, progressiv die Korrektur über die Bremsphase hinaus zu mindern,
- Mittel, die eine erste Kartographie (34) speichern können, um einen Gewichtungssollwert (ActionVveh) in Abhängigkeit von der Geschwindigkeit des Kraftfahrzeugs (Vveh) zu liefern,
- Mittel, die eine zweite Kartographie (37) speichern können, um einen Prozentsatz (PourcDeltabrut) der Abweichung (DeltaC) zwischen dem an die Räder des Kraftfahrzeugs anwendbaren augenblicklichen maximalen Drehmoment (Cmax) und der unbearbeiteten statischen Drehmomentkomponente (Cs_brut) in Abhängigkeit von der Verlangsamung des Kraftfahrzeugs (Gamma1) zu berechnen,
- Mittel zum Vergleich und zur Integration (max) des zweiten Signals (Frein_fil), das dazu bestimmt ist, progressiv die Korrektur in der Bremsphase zu mindern, mit Signalen, die für die unbearbeitete statische Drehmomentkomponente (Cs_brut), das an die Räder des Kraftfahrzeugs anwendbare augenblickliche maximale Drehmoment (Cmax), die Geschwindigkeit (Vveh) des Kraftfahrzeugs und die Verlangsamung (Gamma1) des Kraftfahrzeugs repräsentativ sind.
